Europäisches Patentamt

European Patent Office

Office européen des brevets

(11) Publication number: **0 140 978**

**A1**

(12)

# EUROPEAN PATENT APPLICATION

published in accordance with Art. 158(3) EPC

(21) Application number: **84901415.4**

(22) Date of filing: **04.04.84**

Data of the international application taken as a basis:

(86) International application number:
**PCT/JP84/00166**

(87) International publication number:
**WO84/03963 (11.10.84 84/24)**

(51) Int. Cl.⁴: **G 05 B 19/405**
**G 05 B 23/02**

(30) Priority: **07.04.83 JP 61092/83**

(43) Date of publication of application:
**15.05.85 Bulletin 85/20**

(84) Designated Contracting States:
**DE FR GB**

(71) Applicant: **FANUC LTD**
**5-1, Asahigaoka 3-chome Hino-shi**
**Tokyo 191(JP)**

(72) Inventor: **MIYATA, Mitsuto**
**1768-149, Yugi Hachioji-shi**
**Tokyo 192(JP)**

(72) Inventor: **FUKUDA, Masahiko**
**3-27, Tamadaira Hino-shi**
**Tokyo 191(JP)**

(74) Representative: **Billington, Lawrence Emlyn  et al,**
**HASELTINE LAKE & CO Hazlitt House 28 Southampton**
**Buildings Chancery Lane**
**London WC2A 1AT(GB)**

(54) **APPARATUS FOR DISPLAYING NC COMMAND PROGRAM PORTION STORED AT SPECIFIC ADDRESS.**

㊼ A display apparatus which displays only a portion of an NC command program stored at a specific address. An NC command program stored in an NC command program memory (MEM) is transferred to a specific address portion selection means (SEL). When a selection command is input from a selective-display command input means (IN1), the specific address portion selection means (SEL) selects the portion of the NC command program corresponding to a specific address input thereto from a specific address input means (IN2). The selected NC command program portion is transferred to a display (DRY) where it is displayed.

FIG. 1

EP 0 140 978 A1

**0140978**

S P E C I F I C A T I O N

DISPLAY UNIT FOR SPECIFIED ADDRESS

OF NC COMMAND PROGRAM

## TECHNICAL FIELD

The present invention relates to a display unit for a specified address of an NC (Numerical Control) command program and, more particularly, to a technique for selectively displaying only a specified address referred to from a keyboard at the time of displaying, on a fixed display, an NC command program stored in a bubble memory or the like of NC equipment.

## BACKGROUND ART

In the case of checking an NC command program, the situation occasionally arises where it is desired to verify what command has been issued to a specific address alone. It would be useful for the organization of tools, for example, if it were preknown what T code has been commanded, and it would be helpful to set the amount of compensation of each tool if it were preknown what H code has been commanded. In such a case, according to the prior art, there is no means but to visually look up a desired address in the entire NC command program after printing out all the contents of the program or while turning over displayed pictures of the NC command program provided on a display.

## DISCLOSURE OF THE INVENTION

The present invention has been made in view of the above, and has for its object to provide a display unit for a specified address of an NC command program which is designed to selectively display only a specified address of the NC command program on a display.

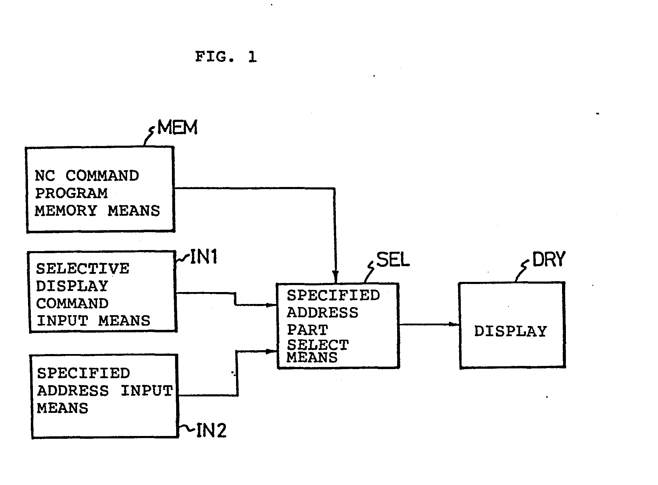

Fig. 1 is a diagram explanatory of the arrangement of the present invention.

An NC command program is stored in an NC command program memory means MEM, and when supplied with input from selective display command input means IN1, specified address part select means SEL selects, from the stored NC command program, an address specified by specified address input means IN2 and characters of the specified address and an address immediately following it.  Then, the selected contents are output to and displayed on a display DPY.

### BRIEF DESCRIPTION OF THE DRAWINGS

Fig. 1 is a diagram explanatory of the arrangement of the present invention; Fig. 2 is a block diagram illustrating, by way of example, the principal part of the hardware structure of a device embodying the present invention; and Figs. 3 and 4 are flowcharts illustrating examples of the software structure of the device embodying the present invention.

### BEST MODE FOR CARRYING OUT THE INVENTION

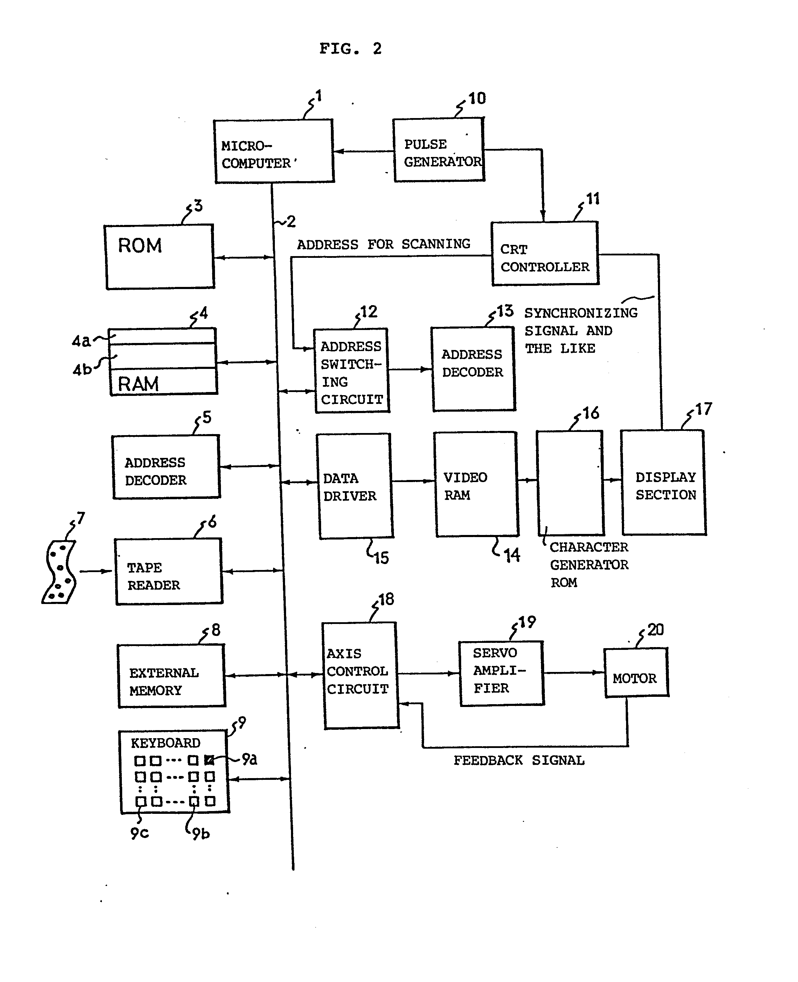

Fig. 2 is a block diagram illustrating the principal part of an example of the hardware structure of a device embodying the present invention. Reference numeral 1 indicates a microcomputer, 2 its bus, 3 a ROM having stored therein programs necessary for causing the microcomputer 1,

to perform its predetermined operations, 4 a RAM having a temporary input buffer area 4a, a running information buffer area 4b, etc., 5 an address decoder, 6 a tape reader, 7 a command tape, 8 an external memory such as a magnetic bubble memory or the like, 9 a keyboard having a selective display command key 9a and pluralities of other plural command keys 9b and character input keys 9c, 10 a pulse generator, 11 a CRT controller, 12 an address switching circuit, 13 an address decoder, 14 a video RAM, 15 a data driver, 16 a character generator ROM, 17 a display section, 18 an axis control circuit, 19 a servo amplifier and 20 a motor. The NC command program, when provided in the form of the command tape 7, is read into the microcomputer 1 by means of the tape

reader 6, and when stored in the external memory 8, it is read out directly from the memory. For convenience of description, let it be assumed that the NC command program is stored in the external memory 8. In ordinary numerical control, the microcomputer 1 reads out the NC command program from the external memory 8 block by block and interprets it, and the axis control circuit 18 is controlled by running information prepared on the basis of the result of interpretation by the microcomputer, thereby controlling the rotation of the motor 20 via the servo amplifier 19.

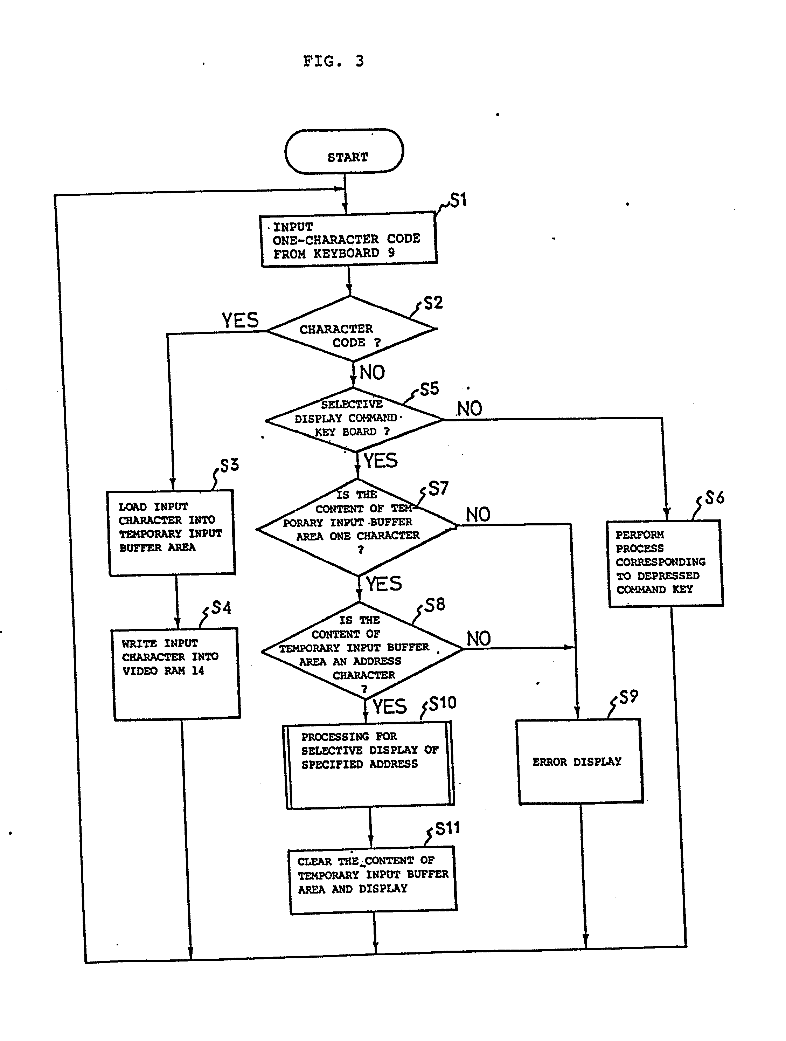

Fig. 3 is a flowchart illustrating an example of the software structure of the device embodying the present invention. A description will hereinafter be given, with reference to Fig. 3, of the specified address displaying function of this device.

At first, when an alphabetic character indicating an address desired to selectively display is entered through using the character input key 9c on the keyboard 9, the microcomputer 1 reads out its input key code (S1) and decides whether it is a character code or not (S2). In this case, since it is a character code, the microcomputer 1 loads the entered character into the temporary input buffer area 4a of the RAM 4 (S3) and, at the same time, writes the entered character via the data driver 15 into the video RAM 14 at a predetermined position, for example, at a position corresponding to the lower end of the display screen (S4). Incidentally, the contents of the video RAM 14 are being cyclically provided by a scanning address of the CRT controller 11 to the display section 17 via the character generator ROM 16, and consequently, the content of the temporary input buffer area 4a is displayed on the display screen of the display section 17. This is intended to facilitate verification of the content of the input.

Next, when the selective display command key 9a of the keyboard 9 is depressed, the microcomputer 1 inputs its key code (S1) and then performs the discriminations in steps S2 and S5, identifying that the depressed key is the selective display command key 9a. Incidentally, when the command key of other kine is depressed, processing corresponding to the depressed key is performed (S6).

When it is identified in step S5 that the input key is the selective display command key, it is checked whether the content of the temporary input buffer area 4a is one character or not and whether it is an address character or not (S7, S8). When it is neither one character nor an address character, an error display is provided (S9). This takes into account the fact that an address in the NC command program is usually indicated by one alphabetic character and all the alphabetic characters cannot be used as addresses. Then, when it is decided in step S8 that the content of the temporary input buffer area is an address character, processing for selective display of the specified address is performed (S10), after which the content of the temporary input buffer area 4a and the display are cleared (S11).

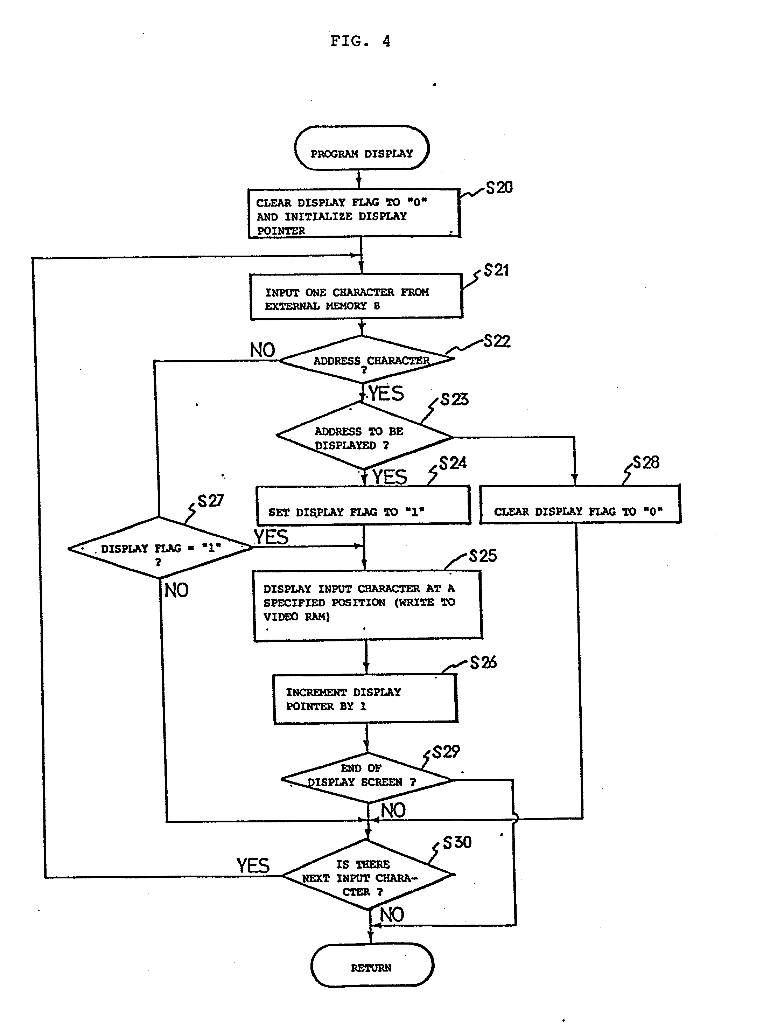

Fig. 4 is a flowchart illustrating an example of software which implements the selective display processing function. Upon starting the selective display processing, the microcomputer 1 clears a display flag set in the RAM 4 to a "0" and, at the same time, sets a pointer indicating the display position, similarly set in the RAM 4, to a value corresponding to the left upper corner of the display screen, for example (S20). Then, one character, for example, at the head of the NC command program stored in the external memory 8 is read (S21), and it is decided whether the character is an address character or not and whether it is an address to be displayed or not (S22, S23). In the event that the thus read character is an address character and an address to be displayed, that is, when it coincides with the address stored in the temporary input buffer area 4a, the display flag is set to a "1" (S24), and the input character is written into the video RAM 14 at an area indicated by the pointer (S25), after which the value of the pointer is incremented by 1 (S26).

If the read character is not the address character, the operation proceeds to step S25 only when the display flag is a "1" (S27), and if the read character is not the address to be displayed, the display flag is cleared to a "0" (S28). The search for the content to be displayed is continued until the value of the pointer reaches a display screen end value, or until the NC command program comes to an end (S29, S30).

Assuming that an NC command program such, for example, as

N1G91G00X123Y456T01:

N2G43Z78H01:

N3G01Z91F23:

N4G00Z-91T02:

N5G01Z91:

N6G00Z091T03:

N7G01Z91:

N8G00Z-91T01:

      .
      .
      .

is stored in the external memory 8 and that the selective display command key 9a is depressed after input of "T", then

      T01   T02   T03   T01   •••••

are displayed on the display screen of the display section 17; thus, it is clear at a glance what tools are to be used.

As has been described in the foregoing, according to the present invention, since only a specified address part of an NC command program is displayed on a display only by specifying an address desired to selectively display and entering a selective display command, the invention possesses the advantage of allowing much ease in verification of a desired address part. Further, since only the specified address part is displayed, evne if the space for display is small, a number of desired addresses can be displayed.

**0140978**


C L A I M

A display unit for a specified address of an NC
command program, characterized by the provision of:  NC
command program memory means; selective display command input
means for selecting only a separately-specified address part
from the NC command program for display; specified address
input means for specifying an address desired to selectively
display; specified address part select means for selecting,
when supplied with an input from the selective display command
input means, the address specified by the specified address
input means and characters of the specified address and the
immediately following address from the NC command program
stored in the NC command program memory menas; and a display
for displaying the content selected by the specified address
part select means.

1

FIG. 1

FIG. 2

FIG. 3

4    0140978

FIG. 4

```
        ┌─────────────────────┐
        │   PROGRAM DISPLAY   │
        └─────────────────────┘
                   │
        ┌─────────────────────┐  S20
        │ CLEAR DISPLAY FLAG TO "0" │
        │ AND INITIALIZE DISPLAY   │
        │ POINTER                  │
        └─────────────────────┘
                   │
        ┌─────────────────────┐  S21
        │ INPUT ONE CHARACTER FROM │
        │ EXTERNAL MEMORY 8        │
        └─────────────────────┘
                   │
    NO       ◇ ADDRESS CHARACTER ◇  S22
                   │ YES
             ◇ ADDRESS TO BE   ◇  S23
             ◇ DISPLAYED ?     ◇──────────┐
                   │ YES                   │
   S27        ┌──────────────────┐  S24   ┌──────────────────┐  S28
   ◇ DISPLAY  │ SET DISPLAY FLAG │       │ CLEAR DISPLAY FLAG│
   ◇ FLAG="1" │ TO "1"           │       │ TO "0"            │
   ◇    ?  YES└──────────────────┘       └──────────────────┘
        │ NO         │
        ┌─────────────────────┐  S25
        │ DISPLAY INPUT CHARACTER AT A │
        │ SPECIFIED POSITION (WRITE TO │
        │ VIDEO RAM)                   │
        └─────────────────────┘
                   │
        ┌─────────────────────┐  S26
        │ INCREMENT DISPLAY   │
        │ POINTER BY 1        │
        └─────────────────────┘
                   │
             ◇ END OF        ◇  S29
             ◇ DISPLAY SCREEN ?◇
                   │ NO
    YES      ◇ IS THERE       ◇  S30
             ◇ NEXT INPUT CHARA-◇
             ◇ CTER ?          ◇
                   │ NO
        ┌─────────────────────┐
        │       RETURN        │
        └─────────────────────┘
```

# INTERNATIONAL SEARCH REPORT

0140978

International Application No. PCT/JP 84/00166

## I. CLASSIFICATION OF SUBJECT MATTER (if several classification symbols apply, indicate all) [3]

According to International Patent Classification (IPC) or to both National Classification and IPC

Int. Cl$^3$  G05B 19/405, 23/02

## II. FIELDS SEARCHED

### Minimum Documentation Searched [4]

| Classification System | Classification Symbols |
|---|---|
| IPC | G05B 19/18, 19/405, 23/02 |

### Documentation Searched other than Minimum Documentation to the Extent that such Documents are included in the Fields Searched [5]

| | | |
|---|---|---|
| Jitsuyo Shinan Koho | 1926 | – 1984 |
| Kokai Jitsuyo Shinan Koho | 1971 | – 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | JP, A, 55-37250 (Nissan Motor Co., Ltd., Ikegai Tekko Kabushiki Kaisha, Fujitsu Fanuc Kabushiki Kaisha) 15 March, 1980 (15. 03. 80), Column 2 | |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| June 20, 1984 (20.06.84) | July 2, 1984 (02.07.84) |

| International Searching Authority [1] | Signature of Authorized Officer [20] |
|---|---|
| Japanese Patent Office | |

Form PCT/ISA/210 (second sheet) (October 1981)